(19) Europäisches Patentamt
European Patent Office
Office européen des brevets

(11) **EP 2 779 759 A1**

(12) **EUROPEAN PATENT APPLICATION**
published in accordance with Art. 153(4) EPC

(43) Date of publication:
**17.09.2014 Bulletin 2014/38**

(21) Application number: **12847130.7**

(22) Date of filing: **08.11.2012**

(51) Int Cl.:
*H04W 52/54* (2009.01)   *H04W 52/36* (2009.01)
*H04J 11/00* (2006.01)

(86) International application number:
**PCT/KR2012/009415**

(87) International publication number:
**WO 2013/069994 (16.05.2013 Gazette 2013/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2011   US 201161557389 P**

(71) Applicant: **LG Electronics Inc.**
**Seoul 150-721 (KR)**

(72) Inventors:
• **KIM, Dongcheol**
  **Anyang-si**
  **Gyeonggi-do 431-080 (KR)**
• **LEE, Hyunwoo**
  **Anyang-si**
  **Gyeonggi-do 431-080 (KR)**
• **JANG, Jiwoong**
  **Anyang-si**
  **Gyeonggi-do 431-080 (KR)**
• **CHO, Hangyu**
  **Anyang-si**
  **Gyeonggi-do 431-080 (KR)**

(74) Representative: **Frenkel, Matthias Alexander**
**Wuesthoff & Wuesthoff**
**Schweigerstrasse 2**
**81541 München (DE)**

(54) **METHOD AND DEVICE FOR SETTING UPLINK TRANSMISSION POWER IN WIRELESS COMMUNICATION SYSTEM**

(57)    The present invention relates to a method of setting uplink transmission power by a terminal in a wireless communication system. The method of setting uplink transmission power by the terminal may include: assigning a plurality of serving cells by a base station; transmitting a random access message including a random access preamble from a secondary cell Scell of the plurality of serving cells to the base station; receiving a random access response message from the base station in response to the random access message; and resetting, in response to receiving the random access response message, a factor of an accumulated mode representing the current uplink transmission control adjusted state at the Scell to which the random access message is transmitted.

FIG. 8

**Description**

TECHNICAL FIELD

The present invention relates to a wireless communication, and more particularly, to a method of setting uplink transmit power in a wireless communication system and an apparatus therefor.

BACKGROUND ART

3GPP LTE (3rd generation partnership project long term evolution hereinafter abbreviated LTE) communication system is schematically explained as an example of a wireless communication system to which the present invention is applicable.

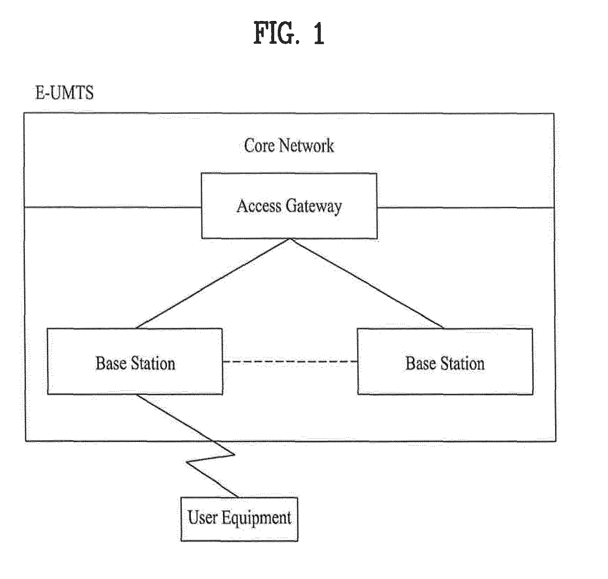

FIG. 1 is a schematic diagram of E-UMTS network structure as one example of a wireless communication system.

E-UMTS (evolved universal mobile telecommunications system) is a system evolved from a conventional UMTS (universal mobile telecommunications system). Currently, basic standardization works for the E-UMTS are in progress by 3GPP. E-UMTS is called LTE system in general. Detailed contents for the technical specifications of UMTS and E-UMTS refers to release 8 and release 9 of "3rd generation partnership project; technical specification group radio access network", respectively.

Referring to FIG 1, E-UMTS includes a user equipment (UE), a base station (BS), and an access gateway (hereinafter abbreviated AG) connected to an external network in a manner of being situated at the end of a network (E-UTRAN). The base station may be able to simultaneously transmit multi data streams for a broadcast service, a multicast service and/or a unicast service.

One base station contains at least one cell. The cell provides a downlink transmission service or an uplink transmission service to a plurality of user equipments by being set to one of 1.25 MHz, 2.5 MHz, 5 MHz, 10 MHz, 15 MHz, and 20 MHz of bandwidths. Different cells can be configured to provide corresponding bandwidths, respectively. A base station controls data transmissions/receptions to/from a plurality of the user equipments. For a downlink (hereinafter abbreviated DL) data, the base station informs a corresponding user equipment of time/frequency region on which data is transmitted, coding, data size, HARQ (hybrid automatic repeat and request) related information and the like by transmitting DL scheduling information. And, for an uplink (hereinafter abbreviated UL) data, the base station informs a corresponding user equipment of time/frequency region usable by the corresponding user equipment, coding, data size, HARQ (hybrid automatic repeat and request)-related information and the like by transmitting UL scheduling information to the corresponding user equipment. Interfaces for user-traffic transmission or control traffic transmission may be used between base stations. A core network (CN) consists of an AG (access gateway) and a network node for user registration of a user equipment and the like. The AG manages a mobility of the user equipment by a unit of TA (tracking area) consisting of a plurality of cells.

Wireless communication technologies have been developed up to LTE based on WCDMA (wideband code division multiple access). Yet, the ongoing demands and expectations of users and service providers are consistently increasing. Moreover, since different kinds of radio access technologies are continuously developed, a new technological evolution is required to have a future competitiveness. Cost reduction per bit, service availability increase, flexible frequency band use, simple structure/open interface and reasonable power consumption of a user equipment and the like are required for the future competitiveness.

Recently, ongoing standardization of the next technology of LTE is performed by 3GPP. Such technology shall be named LTE-A in the present specification. One of main differences between LTE system and LTE-A system may include a system bandwidth difference and an adoption of a relay node.

The goal of LTE-A system is to support maximum 100 MHz wideband. To this end, LTE-A system uses carrier aggregation or bandwidth aggregation to achieve the wideband using a plurality of frequency blocks.

According to the carrier aggregation, pluralities of frequency blocks are used as one wide logical frequency band to use wider frequency band. A bandwidth of each frequency block may be defined based on a bandwidth of a system block used by LTE system. Each frequency block is transmitted using a component carrier.

DISCLOSURE OF THE INVENTION

TECHNICAL TASKS

A technical task intended to achieve by the present invention is to provide a method of setting uplink transmit power, which is set by a user equipment in a wireless communication system.

Another technical task intended to achieve by the present invention is to provide a user equipment for setting uplink transmit power in a wireless communication system.

Technical tasks obtainable from the present invention are non-limited the above mentioned technical tasks. And, other unmentioned technical tasks can be clearly understood from the following description by those having ordinary skill in the technical field to which the present invention pertains.

TECHNICAL SOLUTION

To achieve these and other advantages and in accordance with the purpose of the present invention, as embodied and broadly described, a method of setting an uplink transmit power by a user equipment in a wireless communication system includes the steps of configuring a plurality of configured serving cells from a base station, transmitting a random access message including a random access preamble in a secondary cell (Scell) among a plurality of the configured serving cells to the base station, receiving a random access response message from the base station in response to the random access message, and resetting a factor value of an accumulated mode indicating an adjustment state of a current uplink transmission control on the scell in which the random access message is transmitted, in accordance with reception of the random access response message. The factor value may correspond to a value related to PUSCH (physical uplink shared channel) or PUCCH (physical uplink control channel).

The random access response message includes a transmit power control (TPC) command. And, if the factor value is reset, an initial value of the factor value can be set using the TPC command value included in the random access response message and a total power ramp-up value in accordance with at least one-time a random access preamble transmission on on the Scell more than once.

If the random access response message is received on a prescribed cell among a plurality of the serving cells except the Scell and a UE-specific component coefficient value related to the PUSCH or the PUCCH is signaled by the base station, the factor value can be set to 0 in a manner of being reset.

The method may further include the steps of determining uplink transmit power to transmit the PUSCH or the PUCCH using the set initial value of the factor value and transmitting the PUSCH or the PUCCH using the determined uplink transmit power.

The factor value is not reset for a remaining cell among a plurality of the configured serving cells except the Scell. The Scell belongs to a first TA (timing advance) group and the remaining cell belongs to a second TA group. The remaining cell corresponds to a cell with which uplink synchronization is matched. The second TA group may include a primary cell (Pcell).

To further achieve these and other advantages and in accordance with the purpose of the present invention, a user equipment of setting an uplink transmit power in a wireless communication system includes a receiver configured to receive information on a plurality of configured serving cells from a base station, a transmitter configured to transmit a random access message including a random access preamble on a secondary cell (Scell) among a plurality of the configured serving cells to the base station, wherein the receiver is further configured to receive a random access response message from the base station in response to the random access message, and a processor configured to reset a factor value of an accumulated mode indicating an adjustment state of a current uplink transmission control on the scell in which the random access message is transmitted in accordance with reception of the random access response message. The processor is configured not to reset the factor value for a remaining cell among a plurality of the configured serving cells except the Scell. The Scell belongs to a first TA (timing advance) group and the remaining cell belongs to a second TA group. The remaining cell may correspond to a cell with which uplink synchronization is matched. The second TA group may include a primary cell (Pcell).

ADVANTAGEOUS EFFECTS

Embodiments of the present invention may extensively apply to a control of uplink transmit power which is used for transmitting PUSCH or PUCCH after an access response message is received in a system in which two or more TA groups are supported.

Hence, a user equipment can efficiently set transmit power in a system to which multiple TA (timing advance) is applied.

Effects obtainable from the present invention may be non-limited by the above mentioned effect. And, other unmentioned effects can be clearly understood from the following description by those having ordinary skill in the technical field to which the present invention pertains.

DESCRIPTION OF DRAWINGS

The accompanying drawings, which are included to provide a further understanding of the invention and are incorporated in and constitute a part of this specification, illustrate embodiments of the invention and together with the description serve to explain the principles of the invention.

FIG 1 is a schematic diagram of E-UMTS network structure as one example of a wireless communication system;

FIG. 2 is a block diagram for a configuration of a base station 205 and a user equipment 210 in a wireless communication system 200;

FIG 3 is a diagram for one example of a radio frame structure used in 3GPP LTE/LTE-A system as one example of a wireless communication system;

FIG 4 is a diagram for an example of a resource grid of a downlink slot of 3GPP LTE/LTE-A system as one example of a wireless communication system;

FIG 5 is a diagram for an example of a downlink subframe structure of 3GPP LTE system as one example of a wireless communication system;

FIG 6 is a diagram for an example of an uplink subframe structure of 3GPP LTE system as one example of a wireless communication system;

FIG 7 is a diagram for an example of a carrier aggregation (CA) communication system;

FIG 8 is a diagram for an example of a case to which multiple TA group is set;

FIG 9 is a flowchart for an example of PRACH procedure between a user equipment and a base station.

BEST MODE

MODE FOR INVENTION

Reference will now be made in detail to the preferred embodiments of the present invention, examples of which are illustrated in the accompanying drawings. In the following detailed description of the invention includes details to help the full understanding of the present invention. Yet, it is apparent to those skilled in the art that the present invention can be implemented without these details. For instance, although the following descriptions are made in detail on the assumption that a mobile communication system includes 3GPP LTE/LTE-A system, they are applicable to other random mobile communication systems except unique features of 3GPP LTE/LTE-A system.

Occasionally, to prevent the present invention from getting vaguer, structures and/or devices known to the public are skipped or can be represented as block diagrams centering on the core functions of the structures and/or devices. Wherever possible, the same reference numbers will be used throughout the drawings to refer to the same or like parts.

Besides, in the following description, assume that a terminal is a common name of such a mobile or fixed user stage device as a user equipment (UE), a mobile station (MS), an advanced mobile station (AMS), and the like. And, assume that a base station is a common name of such a random node of a network stage communicating with a terminal as a Node B, an eNode B, a base station (BS), an access point (AP) and the like.

In a mobile communication system, a user equipment may be able to receive information from a base station in downlink and transmit the information to the base station in uplink. The informations transmitted or received by user equipment may include data and various control informations. And, various kinds of physical channels may exist in accordance with types and usages of the informations transmitted or received by the user equipment.

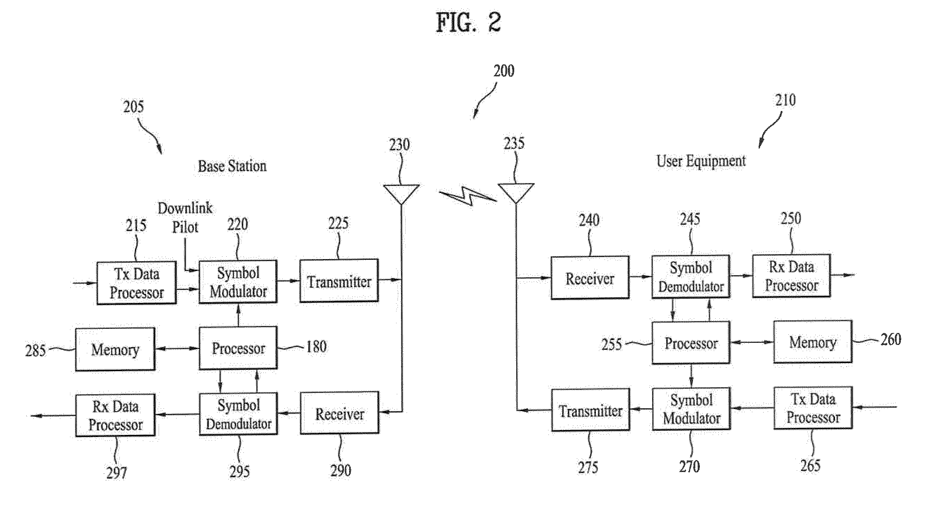

FIG 2 is a block diagram for configurations of a base station 205 and user equipment 210 in a wireless communication system 200.

Although one base station 205 and one user equipment 210 are shown in the drawing to schematically represent a wireless communication system 200, the wireless communication system 200 may include at least one base station and/or at least one user equipment.

Referring to FIG 2, a base station 205 may include a transmitted (Tx) data processor 215, a symbol modulator 220, a transmitter 225, a transceiving antenna 230, a processor 280, a memory 285, a receiver 290, a symbol demodulator 295 and a received data processor 297. And, a user equipment 210 may include a transmitted (Tx) data processor 265, a symbol modulator 270, a transmitter 275, a transceiving antenna 235, a processor 255, a memory 260, a receiver 240, a symbol demodulator 255 and a received data processor 250. Although it is depicted that the base station 205 and the user equipment 210 include one antenna 230/235, respectively in the drawing, each of the base station 205 and the user equipment 210 includes a plurality of antennas. Hence, the base station 205 and the user equipment 210 according to the present invention support an MIMO (multiple input multiple output) system. And, the base station 205 according to the present invention may support both a SU-MIMO (single user-MIMO) and an MU-MIMO (multi user-MIMO) scheme.

In downlink, the transmitted data processor 215 receives traffic data, formats the received traffic data, codes the traffic data, interleaves the coded traffic data, modulates (or symbol maps) the interleaved data, and then provides modulated symbols ('data symbols'). The symbol modulator 220 provides a stream of symbols by receiving and processing the data symbols and pilot symbols.

The symbol modulator 220 multiplexes the data symbols and the pilot symbols together and then transmits the multiplexed symbols to the transmitter 225. In doing so, each of the transmitted symbols may include the data symbol, the pilot symbol or a signal value of zero (i.e., null). In each of symbol durations, the pilot symbols may be contiguously transmitted. In doing so, the pilot symbols may include symbols of frequency division multiplexing (FDM), orthogonal frequency division multiplexing (OFDM), time division multiplexing (TDM), or code division multiplexing (CDM).

The transmitter 225 receives the stream of the symbols, converts the received stream to at least one or more analog signals, additionally adjusts the analog signals (e.g., amplification, filtering, frequency upconverting, etc.), and then generates a downlink signal suitable for a transmission on a radio channel. Subsequently, the downlink signal is transmitted to the user equipment via the transmitting antenna 230.

In the configuration of the user equipment 210, the receiving antenna 235 receives the downlink signal from the base station and then provides the received signal to the receiver 240. The receiver 240 adjusts the received signal (e.g., filtering, amplification and frequency downconverting), digitizes the adjusted signal, and then obtains samples. The symbol demodulator 245 demodulates the received pilot symbols and then provides them to the processor 255 for channel estimation.

The symbol demodulator 245 receives a frequency response estimated value for downlink from the processor 255, obtains data symbol estimated values (i.e., estimated values of the transmitted data symbols) by performing data modulation on the received data symbols, and then provides the data symbol estimated values to the received (Rx) data processor 250. The received data processor 250 reconstructs the transmitted traffic data by performing demodulation (i.e., symbol demapping, deinterleaving and decoding) on the data symbol estimated values.

The processing by the symbol demodulator 245 and the processing by the received data processor 250 are complementary to the processing by the symbol modulator 220 and the processing by the transmitted data processor 215 in the base station 205, respectively.

Regarding the user equipment 210 in uplink, the transmitted data processor 265 provides data symbols by processing the traffic data. The symbol modulator 270 provides a stream of symbols to the transmitter 275 by receiving the data symbols, multiplexing the received data symbols, and then performing modulation on the multiplexed symbols. The transmitter 275 generates an uplink signal by receiving the stream of the symbols and then, processing the received stream. The generated uplink signal is then transmitted to the base station 205 via the transmitting antenna 235.

In the base station 205, the uplink signal is received from the user equipment 210 via the receiving antenna 230. The receiver 290 obtains samples by processing the received uplink signal. Subsequently, the symbol demodulator 295 provides pilot symbols received in uplink and a data symbol estimated value by processing the obtained samples. The received data processor 297 reconstructs the traffic data transmitted from the user equipment 210 by processing the data symbol estimated value.

The processor 255/280 of the user equipment/base station 210/205 directs operations (e.g., control, adjustment, management, etc.) of the user equipment/base station 210/205. The processor 255/280 may be connected to the memory unit 260/285 configured to store program codes and data. The memory 260/285 is connected to the processor 255/280 to store operating systems, applications and general files.

The processor 255/280 may be called one of a controller, a microcontroller, a microprocessor, a microcomputer and the like. And, the processor 255/280 may be implemented using hardware, firmware, software and/or any combinations thereof. In the implementation by hardware, the processor 255/280 may be provided with one of ASICs (application specific integrated circuits), DSPs (digital signal processors), DSPDs (digital signal processing devices), PLDs (programmable logic devices), FPGAs (field programmable gate arrays), and the like.

Meanwhile, in case of implementing the embodiments of the present invention using firmware or software, the firmware or software may be configured to include modules, procedures, and/or functions for performing the above-explained functions or operations of the present invention. And, the firmware or software configured to implement the present invention is loaded in the processor 255/280 or saved in the memory 260/285 to be driven by the processor 255/280.

Layers of a radio protocol between a user equipment and a base station may be classified into 1st layer L1, 2nd layer L2 and 3rd layer L3 based on 3 lower layers of OSI (open system interconnection) model well known to communication systems. A physical layer belongs to the 1st layer and provides an information transfer service via a physical channel. RRC (radio resource control) layer belongs to the 3rd layer and provides control radio resources between UE and network. A user equipment and a base station may be able to exchange RRC messages with each other via a radio communication network using RRC layers.

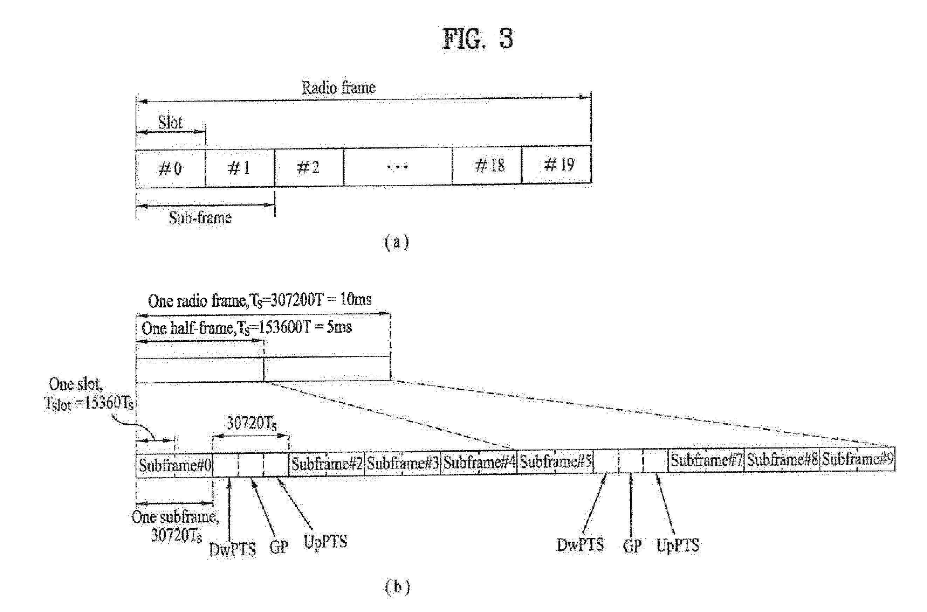

FIG 3 is a diagram for one example of a radio frame structure used in 3GPP LTE/LTE-A system as one example of a wireless communication system.

In a cellular OFDM radio packet communication system, UL/DL (uplink/downlink) data packet transmission is performed by a unit of subframe. And, one subframe is defined as a predetermined time interval including a plurality of OFDM symbols. In the 3GPP LTE standard, a type-1 radio frame structure applicable to FDD (frequency division duplex) and a type-2 radio frame structure applicable to TDD (time division duplex) are supported.

FIG 3 (a) is a diagram for a structure of a downlink radio frame of type 1. A DL (downlink) radio frame includes 10 subframes. Each of the subframes includes 2 slots. And, a time taken to transmit one subframe is defined as a transmission time interval (hereinafter abbreviated TTI). For instance, one subframe may have a length of 1 ms and one slot may have a length of 0.5 ms. One slot may include a plurality of OFDM symbols in time domain and may include a plurality of resource blocks (RBs) in frequency domain. Since 3GPP LTE system uses OFDM in downlink, OFDM symbol is provided to indicate one symbol interval. The OFDM symbol may be named SC-FDMA symbol or symbol interval. Resource block (RB) is a resource allocation unit and may include a plurality of contiguous subcarriers in one slot.

The number of OFDM symbols included in one slot may vary in accordance with a configuration of CP. The CP may be categorized into an extended CP and a normal CP. For instance, in case that OFDM symbols are configured by the normal CP, the number of OFDM symbols included in one slot may be 7. In case that OFDM symbols are configured by the extended CP, since a length of one OFDM symbol increases, the number of OFDM symbols included in one slot may be smaller than that of the case of the normal CP. In case of the extended CP, for instance, the number of OFDM symbols included in one slot may be 6. If a channel status is unstable (e.g., a UE is moving at high speed), it may be able to use the extended CP to further reduce the inter-symbol interference.

When a normal CP is used, since one slot includes 7 OFDM symbols, one subframe includes 14 OFDM symbols. In this case, first maximum 3 OFDM symbols of each subframe may be allocated to PDCCH (physical downlink control channel), while the rest of the OFDM symbols are allocated to PDSCH (physical downlink shared channel).

FIG 3 (b) is a diagram for a structure of a downlink radio frame of type 2. A type-2 radio frame includes 2 half frames. Each of the half frame includes 5 subframes, a DwPTS (downlink pilot time slot), a GP (guard period), and an UpPTS (uplink pilot time slot). Each of the subframes includes 2 slots. The DwPTS is used for initial cell search, synchronization, or a channel estimation in a user equipment. The UpPTS is used for channel estimation of a base station and matching a transmission synchronization of a user equipment. The guard period is a period for eliminating interference generated in uplink due to multi-path delay of a downlink signal between uplink and downlink.

Each of the half-frames is constructed with 5 subframes. In each subframe of a radio frame, 'D' indicates a subframe for DL transmission, 'U' indicates a subframe for UL transmission, and 'S' indicates a special subframe constructed with 3 kinds of fields including DwPTS (downlink pilot time slot), GP (guard period) and UpPTS (uplink pilot time slot). The DwPTS is used for initial cell search, synchronization or channel estimation in a user equipment. The UpPTS is used for channel estimation in a base station and uplink transmission synchronization of a user equipment. The guard period is a period for eliminating interference generated in uplink due to multi-path delay of a downlink signal between uplink and downlink.

In case of the 5ms DL-UL switch-point periodicity, a special subframe (S) exists in every half-frame. In case of the 10ms DL-UL switch-point periodicity, a special subframe (S) exists in a 1st half-frame only. In all configurations, 0th subframe, 5th subframe and DwPTS are the intervals provided for the DL transmission only. UpPTS and a subframe directly contiguous with a special subframe are the intervals for the UL transmission. In case that multi-cells are aggregated, it can be assumed that a user equipment has an identical UL-DL configuration for all cells and a guard period of a special subframe in a cell different from each other is overlapped at least 1456 $T_S$. The above-described structures of the radio frame are exemplary only. And, the number of subframes included in a radio frame, the number of slots included in the subframe and the number of symbols included in the slot may be modified in various ways.

Table 1 shows lengths of DwPTS, guard period and UpPTS in a special subframe.

[Table 1]

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 0 | $6592 \cdot T_S$ | $2192 \cdot T_S$ | $2560 \cdot T_S$ | $7680 \cdot T_S$ | $2192 \cdot T_S$ | $2560 \cdot T_S$ |
| 1 | $19760 \cdot T_S$ | | | $20480 \cdot T_S$ | | |
| 2 | $21952 \cdot T_S$ | | | $23040 \cdot T_S$ | | |
| 3 | $24144 \cdot T_S$ | | | $25600 \cdot T_S$ | | |
| 4 | $26336 \cdot T_S$ | | | $7680 \cdot T_S$ | $4384 \cdot T_S$ | $5120 \cdot T_S$ |

(continued)

| Special subframe configuration | Normal cyclic prefix in downlink | | | Extended cyclic prefix in downlink | | |
|---|---|---|---|---|---|---|
| | DwPTS | UpPTS | | DwPTS | UpPTS | |
| | | Normal cyclic prefix in uplink | Extended cyclic prefix in uplink | | Normal cyclic prefix in uplink | Extended cyclic prefix in uplink |
| 5 | $6592 \cdot T_S$ | $4384 \cdot T_S$ | $5120 \cdot T_S$ | $20480 \cdot T_S$ | | |
| 6 | $19760 \cdot T_S$ | $4384 \cdot T_S$ | $5120 \cdot T_S$ | $23040 \cdot T_S$ | | |
| 7 | $21952 \cdot T_S$ | | | | | |
| 8 | $24144 \cdot T_S$ | | | | | |

Table 2 shows UL-DL configuration.

[Table 2]

| Uplink-downlink configuration | Downlink-to-Uplink Switch-point periodicity | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 ms | D | S | U | U | U | D | S | U | U | U |
| 1 | 5 ms | D | S | U | U | D | D | S | U | U | D |
| 2 | 5 ms | D | S | U | D | D | D | S | U | D | D |
| 3 | 10 ms | D | S | U | U | U | D | D | D | D | D |
| 4 | 10 ms | D | S | U | U | D | D | D | D | D | D |
| 5 | 10 ms | D | S | U | D | D | D | D | D | D | D |
| 6 | 5 ms | D | S | U | U | U | D | S | U | U | D |

Referring to Table 2, UL-DL configurations may be classified into 7 types in the frame structure type 2 in 3GPP LTE system. And, the respective configurations differ from each other in the positions or number of DL subframes, special frames and UL subframes. In the following description, various embodiments of the present invention will be described based on the UL-DL configuration of the frame structure type 2 shown in Table 2.

The above-described structures of the radio frame are exemplary only. And, the number of subframes included in a radio frame, the number of slots included in the subframe and the number of symbols included in the slot may be modified in various ways.

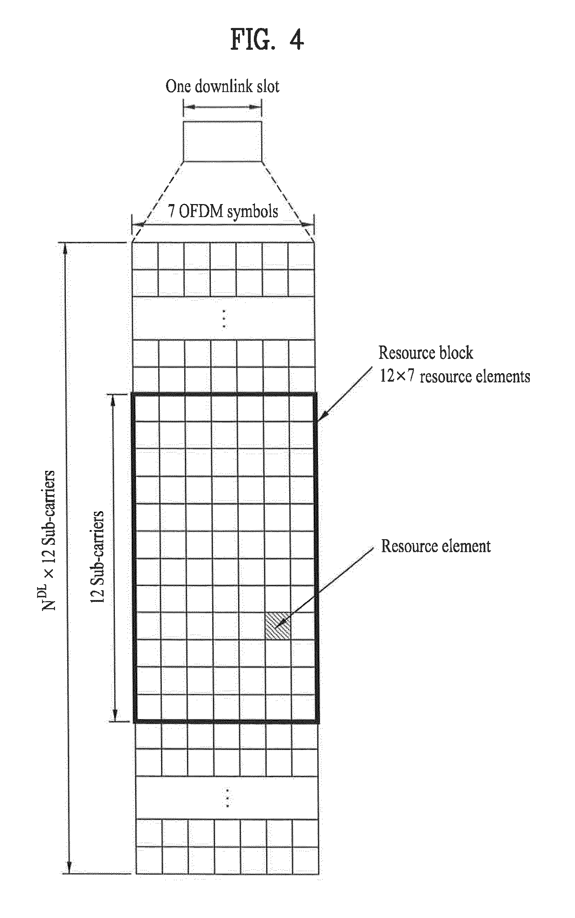

FIG 4 is a diagram for an example of a resource grid of a downlink slot of 3GPP LTE/LTE-A system as one example of a wireless communication system.

Referring to FIG 4, one downlink (DL) slot may include a plurality of OFDM symbols in time domain. In particular, one DL slot includes 7 (6) OFDM symbols and one resource block (RB) may include 12 subcarriers in frequency domain. Each element on a resource grid is called a resource element (hereinafter abbreviated RE). One resource block includes $12 \times 7(6)$ resource elements. The number $N_{RB}$ of resource blocks included in a DL slot may depend on a DL transmission bandwidth. And, the structure of an uplink (UL) slot may be identical to that of the DL slot and an OFDM symbol is replaced with an SC-FDMA symbol.

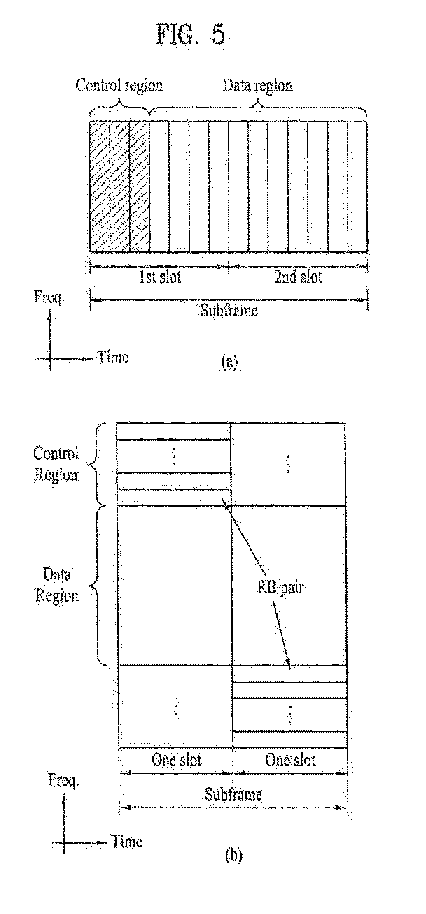

FIG 5 is a diagram for an example of a downlink subframe structure of 3GPP LTE system as one example of a wireless communication system.

Referring to FIG 5, maximum 3(4) fore OFDM symbols of the first slot within a DL subframe correspond to a control region for allocating control channels thereto and the rest of the OFDM symbols correspond to a data region for allocating PDSCH (physical downlink shared channel) thereto. DL (downlink) control channels used in LTE system include PCFICH (physical control format indicator channel), PDCCH (physical downlink control channel), PHICH (physical hybrid-ARQ indicator channel), etc. The PCFICH carried on a first OFDM symbol of a subframe carries the information on the number of OFDM symbols used for the transmission of control channels within the subframe. The PHICH carries HARQ ACK/NACK (hybrid automatic repeat request acknowledgement/negative acknowledgement) signal in response to an UL transmission.

Control information carried on PDCCH may be called downlink control information (DCI: downlink control indicator). A DCI format is defined by a format of 0 for an uplink and the DCI format is defined by formats of 1, 1A, 1B, 1C, 1D, 2, 2A, 3, 3A and the like for a downlink. The DCI format may be able to selectively include a hopping flag, an RB assignment, an MCS (modulation coding scheme), an RV (redundancy version), an NDI (new data indicator), a TPC (transmit power control), a cyclic shift DM RS (demodulation reference signal), a CQI (channel quality information) request, a HARQ process number, a TPMI (transmitted precoding matrix indicator), a PMI (precoding matrix indicator) confirmation and the like according to a usage.

PDCCH is able to carry a transmission format and resource allocation information of DL-SCH (downlink shared channel), a transmission format and resource allocation information of UL-SCH (uplink shared channel), paging information on PCH (paging channel), system information on DL-SCH, resource allocation information of an upper layer control message such as a random access response transmitted on PDSCH, a transmit power control command set for individual user equipments within a user equipment (UE) group, a transmit power control command, activation indication information of VoIP (voice over IP) and the like. A plurality of PDCCHs can be transmitted in a control region and a user equipment is able to monitor a plurality of the PDCCHs. PDCCH is transmitted on a aggregation of a plurality of contiguous control channel elements (CCEs). CCE is a logical assignment unit used to provide PDCCH with a code rate in accordance with a state of a radio channel. CCE corresponds to a plurality of REGs (resource element groups). A format of PDCCH and the number of bits of PDCCH are determined depending on the number of CCEs. A base station determines PDCCH format in accordance with DCI to transmit to a user equipment and attaches CRC (cyclic redundancy check) to control information. The CRC is masked with an identifier (called RNTI (radio network temporary identifier)) in accordance with an owner or usage of PDCCH. If the PDCCH is provided for a specific user equipment, the CRC can be masked with an identifier of the corresponding user equipment, i.e., C-RNTI (i.e., Cell-RNTI). As a different example, if the PDCCH is provided for a paging message, the CRC can be masked with a paging identifier (e.g., P-RNTI (Paging-RNTI)). If the PDCCH is provided for system information, and more particularly, for a system information block (SIB), the CRC can be masked with a system information identifier (e.g., SI-RNTI (system information-RNTI). If the PDCCH is provided for a random access response, the CRC can be masked with RA-RNTI (random access-RNTI).

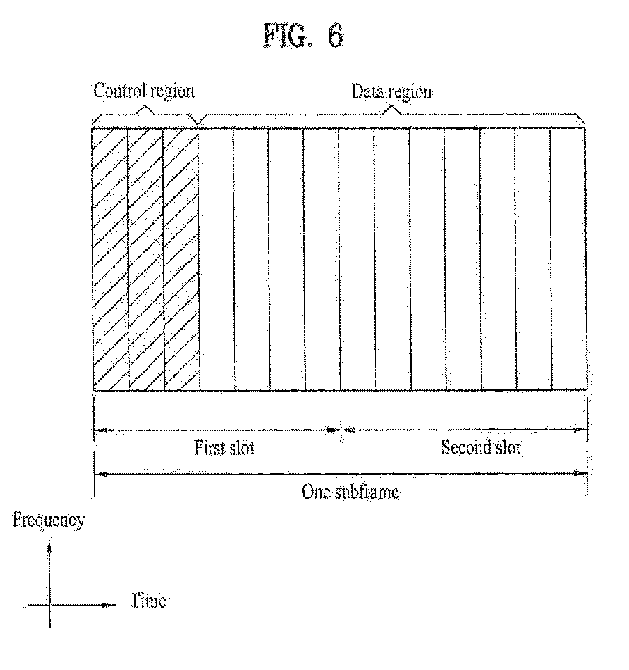

FIG 6 is a diagram for an example of an uplink subframe structure of 3GPP LTE system as one example of a wireless communication system.

Referring to FIG 6, an uplink subframe includes a plurality of slots (e.g., 2 slots). A slot may include a different number of SC-FDMA symbols according to a length of CP. A UL subframe may be divided into a control region and a data region in frequency domain. The data region includes PUSCH and can be used for transmitting a data signal such as an audio and the like. The control region includes PUCCH and can be used for transmitting UL control information (UCI). PUCCH includes an RB pair located at both ends of the data region on a frequency axis and hops on a slot boundary.

The PUCCH can be used for transmitting following control information.

- SR (scheduling request): information used for making a request for an uplink UL-SCH resource. This information is transmitted using an OOK (on-off keying) scheme.
- HARQ ACK/NACK: a response signal for a downlink data packet on PDSCH. This information indicates whether the downlink data packet is successively received. ACK/NACK 1 bit is transmitted in response to a single downlink codeword (CW) and ACK/NACK 2 bits are transmitted in response to two downlink codewords.
- CQI (channel quality indicator): feedback information on a downlink channel. MIMO (multiple input multiple output)-related feedback information includes an RI (rank indicator), a PMI (precoding matrix indicator), a PTI (precoding type indicator), and the like. 20 bits per subframe are used for this information.

An amount of control information capable of being transmitted by a UE in a subframe can be determined according to the number of SC-FDMA symbol available to transmit the control information. The SC-FDMA available for transmitting the control information means a remaining SC-FDMA symbol except an SC-FDMA symbol used for transmitting a reference signal (RS) in a subframe. In case of a subframe to which an SRS (sounding reference signal) is configured thereto, a last SC-FDMA symbol of the subframe is excluded as well. A reference signal is used to detect coherent of PUCCH. PUCCH supports 7 formats depending on transmitted information.

Table 3 indicates a mapping relation between a PUCCH format and a UCI in LTE.

[Table 3]

| PUCCH format | UL control information (UCI) |
|---|---|
| Format 1 | SR (scheduling request) (un-modulated wave) |
| Format 1a | 1-bit HARQ ACK/NACK (SR existence/non-existence) |

(continued)

| PUCCH format | UL control information (UCI) |
|---|---|
| Format 1b | 2-bit HARQ ACK/NACK (SR existence/non-existence) |
| Format 2 | CQI (20 coded bits) |
| Format 2 | CQI and 1- or 2-bit HARQ ACK/NACK (20 bits) (only applied to extended CP) |
| Format 2a | CQI and 1-bit HARQ ACK/NACK (20+1 coded bits) |
| Format 2b | CQI and 2-bit HARQ ACK/NACK (20+2 coded bits) |

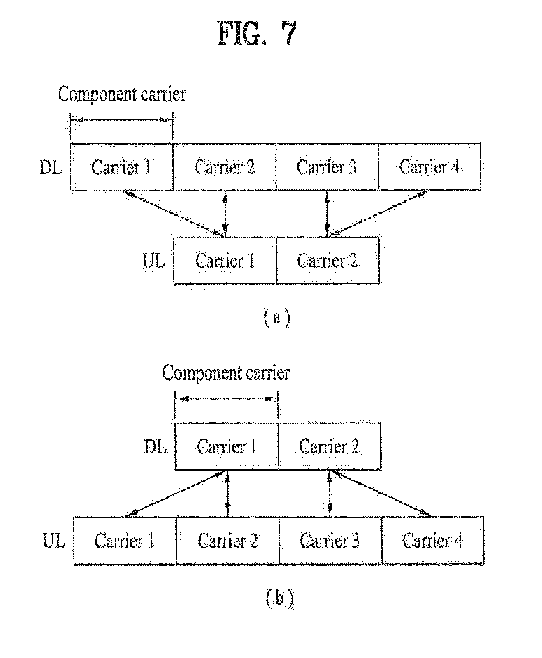

FIG. 7 is a diagram for an example of a carrier aggregation (CA) communication system.

LTE-A system uses a carrier aggregation (or bandwidth aggregation) technique using a wider uplink/downlink bandwidth in a manner of collecting a plurality of uplink/downlink frequency bandwidths to use a wider frequency bandwidth. Each of small frequency bandwidths is transmitted using a component carrier (CC). The component carrier can be comprehended as a carrier frequency (or, a center carrier, a center frequency) for a corresponding frequency block.

Each of the component carriers can be contiguous or non-contiguous with each other in frequency domain. Bandwidth of the CC can be limited to the bandwidth of a legacy system for a backward compatibility with the legacy system. For instance, a legacy 3GPP LTE supports a bandwidth of 1.4 MHz, 3 MHz, 5 MHz, 10 MHz, 15 MHz, and 20 MHz and LTE-A may be able to support a bandwidth bigger than 20 MHz in a manner of using the aforementioned bandwidths supported by LTE only. The bandwidth of each CC can be individually determined. It is possible to perform an asymmetrical carrier aggregation, which means that the number of DL CC and the number of UL CC is different from each other. DL CC/UL CC link can be configured to be fixed in a system or to be semi-static. For instance, as shown in FIG 6(a), in case that there exist 4 DL CCs and 2 UL CCs, it may be possible to configure a DL-UL linkage corresponding to DL CC : UL CC = 2 : 1. Similarly, as shown in FIG 6(b), in case that there exist 2 DL CCs and 4 UL CCs, it may be possible to configure the DL-UL linkage corresponding to DL CC : UL CC = 1 : 2. Unlike the drawing, it is able to configure a symmetrical carrier aggregation, which means that the number of DL CC and the number of UL CC are identical to each other. In this case, it is possible to configure the DL-UL linkage corresponding to DL CC : UL CC = 1 : 1.

Although a whole bandwidth of a system is configured with N number of CC, a frequency band capable of being monitored/received by a specific user equipment can be limited to M (< N) number of CC. Various parameters for a carrier aggregation can be configured cell-specifically, UE group-specifically, or UE-specifically. Meanwhile, control information can be configured to be transceived only on a specific channel. The specific channel can be called a primary CC (PCC) and the rest of CCs can be called secondary CCs (SCCs).

LTE-A uses a cell concept to manage a radio resource. The cell is defined as a combination of a DL and UL resource and the UL resource is not a mandatory element. Hence, a cell can be configured with the DL resource alone or can be configured with the DL resource and the UL resource. In case of supporting the carrier aggregation, a linkage between a carrier frequency of the DL resource (or, DL CC) and a carrier frequency of the UL resource (or, UL CC) can be indicated by system information. A cell operating on a primary frequency (or, PCC) is called a primary cell (Pcell) and a cell operating on a secondary frequency (or, SCC) is called a secondary cell (Scell).

The Pcell is used for a user equipment to perform an initial connection establishment process or a connection re-establishment process. The Pcell may correspond to a cell indicated in the process of a handover. The Scell can be configured after an RRC (radio resource control) connection is established and can be used to provide an additional radio resource. Both the Pcell and the Scell can be commonly called a serving cell. Hence, in case of a user equipment not configured with the carrier aggregation while staying in a state of RRC_CONNECTED or the user equipment not supporting the carrier aggregation, there exists only one serving cell configured as a Pcell. On the contrary, in case of a user equipment configured with the carrier aggregation and staying in a state of RRC_CONNECTED, there exists at least one serving cell. And, the Pcell and the whole of the Scells are included in the whole of the serving cell. For the carrier aggregation, after an initial security activation process is started, a network may be able to configure at least one Scell for a carrier aggregation supportive user equipment in addition to the Pcell, which is initially configured in the connection establishment process.

Unlike a legacy LTE system using a single carrier, the carrier aggregation using a plurality of component carriers needs a method of efficiently managing the component carriers. In order to efficiently manage the component carriers, the component carriers can be classified according to a role and property of the component carriers. In the carrier aggregation, multiple carriers can be divided into a primary component carrier (PCC) and a secondary component carrier (SCC) and this may correspond to a UE-specific parameter.

The primary component carrier is a component carrier playing a role of a center of managing the component carriers in case of using a plurality of component carriers. One primary component carrier is defined for each of user equipments. The primary component carrier may play a role of a core carrier managing all aggregated component carriers. The secondary component carrier may play a role of providing an additional frequency resource to provide a higher transfer rate. For instance, a base station is able to perform an access (RRC) for signaling a user equipment via the primary cell. In order to provide information necessary for security and a higher layer, the primary cell can be used as well. In practical, if there exists a single component carrier only, the corresponding component carrier will become a primary component carrier. In this case, the component carrier may be able to play a role identical to that of a carrier of a legacy LTE system.

Among a plurality of component carriers, a base station can assign an activated component carrier (ACC) to a user equipment. The user equipment is aware of the activated component carrier (ACC) assigned to the user equipment in advance via a signaling and the like. The user equipment collects responses for a plurality of PDCCHs received from a DL PCell and DL Scells and can transmit the responses on PUCCH via an UL PCell.

First of all, determination of PUSCH transmit power for a user equipment to transmit PUSCH in 3GPP LTE/LTE-A system is described in the following description. The following Formula 1 is a formula to determine transmit power of a user equipment in case that PUSCH is transmitted only, while PUCCH is not simultaneously transmitted in a subframe index i of a serving cell c in a CA supportive system.

[Formula 1]

$$P_{\mathrm{PUSCH}c}(i) = \min \left\{ \begin{array}{l} P_{\mathrm{CMAX}c}(i), \\ 10\log_{10}(M_{\mathrm{PUSCH}c}(i)) + P_{\mathrm{O\_PUSCH}c}(j) + \alpha_c(j) \cdot PL_c + \Delta_{\mathrm{TF}c}(i) + f_c(i) \end{array} \right\} \quad [\mathrm{dBm}]$$

The following Formula 2 is a formula to determine transmit power of a user equipment in case that PUCCH and PUSCH are simultaneously transmitted in a subframe index i of a serving cell c in a CA supportive system

[Formula 2]

$$P_{\mathrm{PUSCH.c}}(i) = \min \left\{ \begin{array}{l} 10\log_{10}\left(\hat{P}_{\mathrm{CMAX.c}}(i) - \hat{P}_{\mathrm{PUCCH}}(i)\right), \\ 10\log_{10}(M_{\mathrm{PUSCH.c}}(i)) + P_{\mathrm{O\_PUSCH.c}}(j) + \alpha_c(j) \cdot PL_c + \Delta_{\mathrm{TF.c}}(i) + f_c(i) \end{array} \right\} \quad [\mathrm{dBm}]$$

Parameters described in the following in relation to the Formula 1 and the Formula 2 correspond to parameters necessary for determining UL transmit power of a user equipment in a serving cell c. In this case, $P_{\mathrm{CMAX,c}}(i)$ of the Formula 1 indicates transmittable maximum transmit power of a user equipment in the subframe index i and $\hat{P}_{\mathrm{CMAX.c}}(i)$ of the Formula 2 indicates a linear value of $P_{\mathrm{CMAX.c}}(i)$ $\hat{P}_{\mathrm{PUCCH}}(i)$ of the Formula 2 indicates a linear value of $P_{\mathrm{PUCCH}}(i)$. In this case, $P_{\mathrm{PUCCH}}(i)$ indicates PUCCH transmit power in the subframe index i.

In the Formula 1, $M_{\mathrm{PUSCH.c}}(i)$ is a parameter indicating a bandwidth of PUSCH resource allocation represented by the number of resource block valid for the subframe i. This parameter is a value assigned by a base station. $P_{\mathrm{O\_PUSCH.c}}(j)$ is a parameter configured by the sum of a cell-specific nominal component $P_{\mathrm{O\_NOMINAL\_PUSCH.c}}(j)$ provided by an upper layer and a UE-specific component $P_{\mathrm{O\_UE\_PUSCH.c}}(j)$ provided by an upper layer. A base station informs a user equipment of this value. In case of PUSCH transmission/retransmission corresponding to a dynamically scheduled grant, j equals to 1. In case of PUSCH transmission/retransmission corresponding to a random access response grant, j equals to 2. And, it may be represented as follows. $P_{\mathrm{O\_UE\_PUSCH.c}}(2)=0$ and $P_{\mathrm{O\_NOMINAL\_PUSCH.c}}(2)=P_{\mathrm{O\_PRE}}+\Delta_{PREAMBLE\_Msg3}$. Parameters such as $P_{\mathrm{O\_PRE}}$ (*preambleInitialReceivedTargetPower*) and $\Delta_{PREAMBLE\_Msg3}$ are signaled in an upper layer.

$\alpha_c(j)$ corresponds to a pathloss compensation factor. This is an upper layer providing cell-specific parameter transmitted by a base station by 3 bits. $\alpha \in \{0, 0.4, 0.5, 0.6, 0.7, 0.8, 0.9, 1\}$ where j = 0 or 1 and $\alpha_c(j)$ = 1 where j = 2. A base station informs a user equipment of this value.

Pathloss ($PL_c$) is a DL pathloss (or, signal loss) estimation value calculated by a user equipment in dB unit and is represented as PLc=referenceSignalPower - higher layer filteredRSRP. In this case, a base station can inform a user equipment of the referenceSignalPower via an upper layer.

$f_c(i)$ is a value indicating a current PUSCH power control adjustment state for the subframe index i and can be represented by a current absolute value or an accumulated value. If an accumulation is enabled based on a parameter *Accumulation-enabled* provided by an upper layer or if a TPC command $\delta_{\mathrm{PUSCH.c}}$ is included in PDCCH together with a DCI format 0 for a serving cell c where a CRC is scrambled with a temporary C-RNTI, it satisfies $f_c(i)=f_c(i-1)+\delta_{PUSCH.c}(i-K_{PUSCH})$. $\delta_{PUSCH.c}(i-K_{PUSCH})$ is signaled on PDCCH together with a DCI format 0/4 or a DCI format 3/3A in a subframe $i-K_{PUSCH}$. In this case, $f_C(0)$ is a first value after an accumulated value is reset.

A value of $K_{PUSCH}$ is defined by a LTE standard as follows.

Regarding FDD (frequency division duplex), the value of $K_{PUSCH}$ corresponds to 4. Regarding TDD UL/DL configuration 1 - 6, the value of $K_{PUSCH}$ is listed in Table 4 as follows. For a TDD UL/DL configuration 0, an LSB (least significant bit) of an UL index is configured by 1. If PUSCH transmission is scheduled together with PDCCH of DCI format 0/4 in a subframe 2 or 7, the value of $K_{PUSCH}$ corresponds to 7. The values of $K_{PUSCH}$ for other PUSCH transmissions are listed in Table 4.

[Table 4]

| TDD UL/DL Configuration | subframe number *i* | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | 7 | 4 | - | - | 6 | 7 | 4 |
| 1 | - | - | 6 | 4 | - | - | - | 6 | 4 | - |
| 2 | - | - | 4 | - | - | - | - | 4 | - | - |
| 3 | - | - | 4 | 4 | 4 | - | - | - | - | - |
| 4 | - | - | 4 | 4 | - | - | - | - | - | - |
| 5 | - | - | 4 | - | - | - | - | - | - | - |
| 6 | - | - | 7 | 7 | 5 | - | - | 7 | 7 | - |

Except a DRX situation, a user equipment attempts to decode PDCCH of a DCI format 0/4 with C-RNTI of the user equipment or PDCCH of a DCI format 3/3A and a DCI format for SPS C-TNTI with TPC-PUSCH-RNTI of the user equipment in every subframe. If the DCI format 0/4 and the DCI format 3/3A for a serving cell c are detected in an identical subframe, the user equipment should use $\delta_{PUSCH.c}$ provided by the DCI format 0/4. If there is no TPC command decoded for the serving cell c, a DRX situation occurs, or i is not an UL subframe in TDD, it satisfies $\delta_{PUSCH.c}$ = 0 dB.

$\delta_{PUSCH.c}$ accumulated value signaled on PDCCH together with a DCI format 0/4 is listed in Table 5 as follows. If PDCCH going along with a DCI format 0 is validated or released by SPS activation, it satisfies $\delta_{PUSCH.c}$ = 0 dB. $\delta_{PUSCH.c}$ accumulated value signaled on PDCCH together with a DCI format 3/3A may correspond to one of a set 1 in the following Table 5 or may correspond to one of a set 2 , which is determined by a TPC-index parameter provided by an upper layer, in the following Table 6.

[Table 5]

| TPC Command Field in DCI format 0/3/4 | Accumulated $\delta_{PUSCH.c}$ [dB] | Absolute $\delta_{PUSCH.c}$ [dB] only DCI format 0/4 |
|---|---|---|
| 0 | -1 | -4 |
| 1 | 0 | 1 |
| 2 | 1 | 1 |
| 3 | 3 | 4 |

[Table 6]

| TPC Command Field in DCI format 3A | Accumulated $\delta_{PUSCH.c}$ [dB] |
|---|---|
| 0 | -1 |
| 1 | 1 |

If a user equipment reaches a $P_{CMAX,c}$ for a serving cell c, a positive TPC command for the serving cell c is not accumulated. If a user equipment reaches lowest power, a negative TPC command is not accumulated.

For the serving cell c, when $P_{O\_UE\_PUSCH.c}(j)$ value changes in an upper layer and when a user equipment receives a random access response message in a primary cell, the user equipment resets an accumulation in the following cases.

If an accumulation is not enabled based on a parameter *Accumulation-enabled* provided by an upper layer, it satisfies $f_c(i)=\delta_{PUSCH.c}(i\text{-}K_{PUSCH})$. In this case, $\delta_{PUSCH.c}(i\text{-}K_{PUSCH})$ is signaled on PDCCH together with a DCI format 0/4 in a subframe $i\text{-}K_{PUSCH}$.

A value of $K_{PUSCH}$ is as follows. Regarding FDD (frequency division duplex), the value of $K_{PUSCH}$ corresponds to 4. Regarding TDD UL/DL configuration 1 - 6, the value of $K_{PUSCH}$ is listed in Table 4 as follows. For a TDD UL/DL configuration 0, an LSB (least significant bit) of an UL index is configured by 1. If PUSCH transmission is scheduled together with PDCCH of DCI format 0/4 in a subframe 2 or 7, the value of $K_{PUSCH}$ corresponds to 7. The values of $K_{PUSCH}$ for other PUSCH transmissions are listed in Table 4.

$\delta_{PUSCH.c}$ accumulated value signaled on PDCCH together with a DCI format 0/4 is listed in aforementioned Table 5. If PDCCH going along with a DCI format 0 is validated or released by SPS activation, it satisfies $\delta_{PUSCH.c} = 0$ dB.

If there is no PDCCH going along with a DCI format decoded for a serving cell c, a DRX (discontinued reception) occurs, or i is not an UL subframe in TDD, it satisfies $f_c(i)=f_c(i\text{-}1)$.

For $f_c(*)$ (an accumulated value or a current absolute value), a first value is configured as follows.

Regarding a serving cell c, if $P_{O\_UE\_PUSCH.c}(j)$ value changes in an upper layer or if $P_{O\_UE\_PUSCH.c}(j)$ value is received by an upper layer and the serving cell c corresponds to a secondary cell, it satisfies $f_c(0) = 0$. On the other hand, if a serving cell corresponds to a primary cell, it satisfies $f_c(0)=\Delta P_{rampup}+\delta_{msg2}$. $\delta_{msg2}$ is a TPC command indicated by a random access response and $\Delta P_{rampup}$ corresponds to the total power ramp-up from the first to the last preamble provided by an upper layer.

In relation to the present invention, if a TPC command operates in an accumulated mode in uplink power control (ULPC), an accumulated value may operate according to a related art as follows. When $P_{O\_UE\_PUSCH.c}(i)$ value is changed in an upper layer for a serving cell c and a user equipment receives a random access response in a primary cell, the user equipment should reset accumulation in the following case.

The following Formula 3 is a formula related to uplink power control for PUCCH in LTE-A system.

[Formula 3]

$$P_{PUCCH}(i) = \min\left\{ \begin{array}{l} P_{CMAX.c}(i), \\ P_{0\_PUCCH} + PL_c + h(n_{CQI}, n_{HARQ}, n_{SR}) + \Delta_{F\_PUCCH}(F) + \Delta_{TxD}(F') + g(i) \end{array} \right\} \text{[dBm]}$$

In the Formula 3, i and c indicate a subframe index and a cell index, respectively. If a user equipment is configured to transmit PUCCH via two antenna ports by an upper layer, $\Delta_{TxD}(F')$ value is provided to the user equipment by the upper layer, otherwise, it becomes 0. A parameter described in the following relates to a serving cell corresponding to a cell index c.

In this case, i and $P_{CMAX}$ indicate a subframe index and maximum transmittable power of the user equipment, respectively. $P_{O\_PUCCH}$ is a parameter configured by a sum of cell-specific parameters. $P_{O\_PUCCH}$ is informed by a base station via an upper layer signaling. PL is a DL pathloss (or, signal loss) estimation value calculated by a user equipment in dB unit and is represented as PL = referenceSignalPower - higher layer filteredRSRP. h(n) is a value varying according to a PUCCH format, $n_{CQI}$ is the number of information bits for CQI (channel quality information), and $n_{HARQ}$ indicates the number of HARQ bits. $\Delta_{F\_PUCCH}(F)$ value is a value relative to a PUCCH format 1a and corresponding to PUCCH format (F). This value is informed by a base station via an upper layer signaling. g(i) indicates adjustment state of a current PUCCH power control in a subframe of index i.

$$h(n_{CQI}, n_{HARQ}, n_{SR})$$

corresponds to 0 in PUCCH format 1, 1a, and 1b. If one or more serving cells are set to a user equipment in the PUCCH format 1b, it can be represented as $h(n_{CQI}, n_{HARQ}, n_{SR}) = \dfrac{(n_{HARQ} - 1)}{2}$ In case of a normal CP (cyclic prefix) and an extended CP in PUCCH format 2, 2a, and 2b, $h(n_{CQI}, n_{HARQ}, n_{SR})$ can be represented as Formula 4 and Formula 5, respectively.

[Formula 4]

$$h\left(n_{CQI},n_{HARQ}.n_{SR}\right)=\begin{cases}10\log_{10}\left(\dfrac{n_{CQI}}{4}\right)&\text{if }n_{CQI}\geq 4\\0&\text{otherwise}\end{cases}$$

[Formula 5]

$$h\left(n_{CQI},n_{HARQ}.n_{SR}\right)=\begin{cases}10\log_{10}\left(\dfrac{n_{CQI}+n_{HARQ}}{4}\right)&\text{if }n_{CQI}+n_{HARQ}\geq 4\\0&\text{otherwise}\end{cases}$$

If a user equipment transmits HARQ-ACK/SR of more than 11 bits in PUCCH format 3, can be represented as Formula 6. Otherwise, it can be represented as Formula 7 in the following.

[Formula 6]

$$h(n_{CQI},n_{HARQ},n_{SR})=\frac{n_{HARQ}+n_{SR}-1}{3}$$

[Formula 7]

$$h(n_{CQI},n_{HARQ},n_{SR})=\frac{n_{HARQ}+n_{SR}-1}{2}$$

If $P_{O\_UE\_PUCCH}$ value changes in an upper layer, it may correspond to $g(0)=0$. Otherwise, it may be represented as $g(0)=\Delta P_{rampup}+\delta_{msg2}$. $\delta_{msg2}$ is a TPC command indicated by a random access response and $\Delta P_{rampup}$ corresponds to the total power ramp-up from the first to the last preamble provided by an upper layer.

If a user equipment reaches a $P_{CMAX,c}$ for a primary cell c, a positive TPC command for the primary cell c is not accumulated. On the contrary, if the user equipment reaches lowest power, a negative TPC command is not accumulated. When $P_{O\_UE\_PCCCH}$ value is changed by an upper layer or a random access response message (msg2) is received, the user equipment resets accumulation.

Meanwhile, following Formula 8 and Formula 9 indicate $\delta_{PUCCH}$ value in a TPC command field of DCI format.

[Formula 8]

| TPC Command Field in DCI format 1A/1B/1D/1/2A/2B/2C/2/3 | $\delta_{\textbf{PUCCH}}$ [dB] |
|---|---|
| 0 | 1 |
| 1 | 0 |
| 2 | 1 |
| 3 | 3 |

[Formula 9]

| TPC Command Field in DCI format 3A | $\delta_{\text{PUCCH}}$ [dB] |
|---|---|
| 0 | -1 |
| 1 | 1 |

CA introduced by LTE-A system can be configured within an intra-band only. Or, the CA can be configured by a combination of component carriers of inter-bands. Conventionally, a single UL timing advance (TA) is used to be configured irrespective of the CA configuration. Yet, it may be difficult to use the single UL timing advance due to a difference of frequency characteristic between inter-bands. And, in case of supporting a form of multiple TA groups in consideration of the difference of frequency characteristic, there may also exist a possibility of configuring multiple primary cells in a user equipment. Since a legacy user equipment is designed based on a single TA and a single PCell, if a plurality of TAs are supported, there may exist problems due to a plurality of the TAs.

Multiple TA groups can be formed in a CA supportive system. One TA group consists of one or more cell/component carriers. An Scell of a TA group not including a PCell can transmit a PRACH (physical random access channel) preamble for TA. A user equipment receives PDCCH from a base station and may be then able to perform a non-contention based PRACH procedure in a manner of being triggered by a PDCCH command. In this case, the user equipment is PRACH triggered by the PDCCH command in a corresponding cell and transmits a PRACH preamble in the SCell. The base station transmits a random access response message to the user equipment in response to the PRACH preamble. The base station configures a plurality of serving cells for the user equipment via upper layer signaling and the like and may configure a plurality of TA groups for the user equipment.

Embodiment 1 (non-contention based PRACH preamble transmission process)

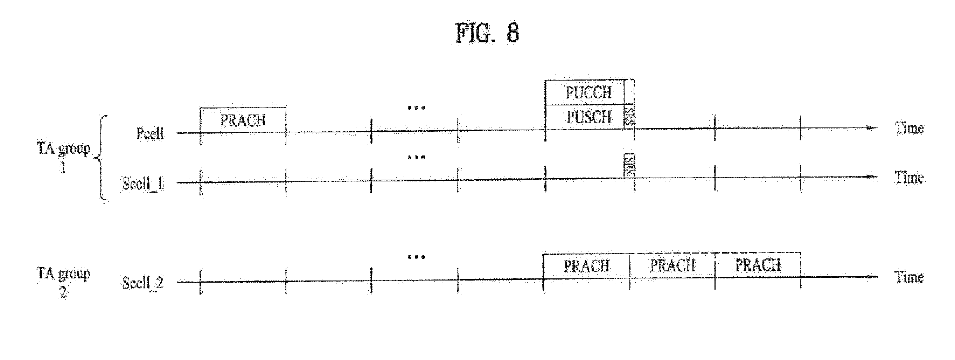

FIG 8 is a diagram for an example of a case to which multiple TA group is set.

As depicted in FIG 8, TA groups different from each other can be configured in a user equipment by a base station. A TA group 1 consists of a primary cell (PCell) and a SCell 1 and a TA group 2 consists of a SCell 2. Assume that UL/DL synchronization is matched with each other in the TA group 1 since the TA 1 group includes the primary cell and UL synchronization of a cell of the TA group 2 is not matched.

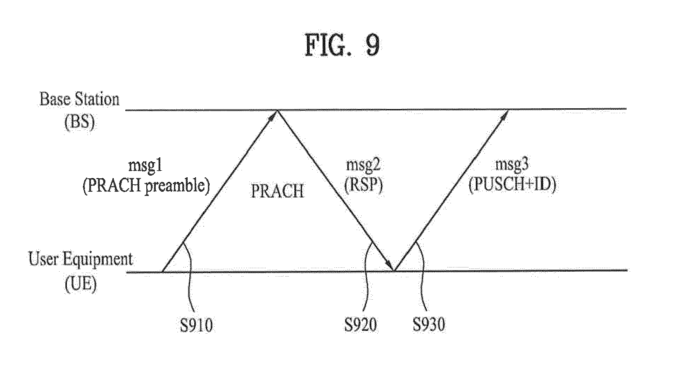

FIG 9 is a flowchart for an example of PRACH procedure between a user equipment and a base station.

In order to secure synchronization of the TA group 1 in PCell, a base station can trigger PRACH by a PDCCH command via PDCCH. Subsequently, a user equipment transmits a PRACH preamble (msg1) to the base station [S910]. The transmission of the PRACH preamble, which is initially transmitted by the user equipment to match synchronization with each other, corresponds to transmission of a contention-based PRACH preamble. The base station transmits a random access response message (msg2) to the user equipment in response to the received msg1 [S920]. In this case, the msg2 includes contents shown in Table 7 including a TA command. Following Table 7 shows information included in a random access response grant (RA response grant) in 3GPP LTE TS 36.213.

[Table 7]

| content | Number of bits |
|---|---|
| Hopping flag | 1 |
| Fixed size resource block assignment | 10 |
| Truncated modulation and coding scheme | 4 |
| TPC command for scheduled PUSCH | 3 |
| UL delay | 1 |
| CSI request | 1 |

Meanwhile, in FIG 8, in order for the user equipment to match UL/DL synchronization with each other in a SCell 2 of the TA group 2, the base station can trigger PRACH by a PDCCH command via PDCCH. Subsequently, the user equipment transmits a PRACH preamble (MSG1) to the base station [S910]. Since the user equipment transmits a non-contention based PRACH preamble, the base station needs a PRACH for the use of TA. The transmission of the PRACH preamble, which is transmitted by the user equipment in the SCell 2 of the TA group 2, corresponds to transmission of the non-contention based PRACH preamble.

The present invention proposes that a non-contention based PRACH preamble transmission process in a TA group not including a PCell is to be terminated by transmitting the msg1 in a system supporting TA groups different from each other. In particular, it may limit the user equipment to perform the step S910 only in FIG 9. In this case, PUSCH resource allocation of the base station can be transmitted via PDCCH. And, an initial TA command can be transmitted in a manner of being included in PDSCH or PDCCH.

Embodiment 2 (power control in contention based PRACH procedure)

If a user equipment transmits a msg1 (PRACH preamble) in a SCell among serving cells, a base station can transmit information on a msg2 and PUSCH assigned by the msg2 in a cell different from a cell in which the msg1 is transmitted (i.e., the SCell). In this case, if there is no indicator indicating the cell in which the msg2 is transmitted or a cell indicated by the indicator is a cell (PCell or Scell) with which UL synchronization is matched, the user equipment resets a TPC command (TPC command for PUSCH or PUCCH) of an accumulated mode for a cell in which the msg2 is received. As an example, irrespective of whether the base station transmits the msg2 in the Scell 2 in which the msg1 is transmitted or a different cell in response to the msg1 (PRACH preamble) transmitted by the user equipment in the Scell 2, if the user equipment receives the msg2, the user equipment should reset the TPC command (TPC command for PUSCH or PUCCH) of the accumulated mode for the Scell 2 in which the msg1 (PRACH preamble) is transmitted.

Meanwhile, if the user equipment transmits the msg1 (PRACH preamble) in the Scell 2 and receives the msg2 from a different cell instead of the Scell 2, the TPC command (TPC command for PUSCH or PUCCH) of the accumulated mode is not reset for PUSCH/PUCCH power control in a UL cell paired with the cell in which the msg2 is received. Yet, the TPC command (TPC command for PUSCH or PUCCH) of the accumulated mode may be reset in the UL cell paired with the cell in which the msg2 is received. Reset can be applied by 0 dB or with a predetermined level. If the predetermined level corresponds to multi-level, the base station may signal to the user equipment for the predetermined level.

And, if the user equipment transmits the msg1 (PRACH preamble) in the Scell and receives the msg2 from the base station in the Scell in response to the msg1, the TPC command (TPC command for PUSCH or PUCCH) of the accumulated mode is reset in the Scell. Yet, it may not reset the TPC command (TPC command for PUSCH or PUCCH) of the accumulated mode in a different cell (Pcell and a different Scell).

And, if the user equipment receives $P_{O\_UE\_PUSCH.c}(j)$ instead of the msg2 (random access response message) in the Scell, it should satisfy a condition $f_c(0)=0$

Meanwhile, in performing power control for PUCCH, a random access operation in the PCell is not affected by a random access operation in a different TA group. In particular, it may be represented as $g(0)=\Delta P_{rampup} + \delta_{msg2}$ (In this case, $\delta_{msg2}$ is a TPC command indicated by a random access response message (msg2) corresponding to the random access preamble transmitted in the PCell and $\Delta P_{rampup}$ corresponds to the total power ramp-up from the first to the last preamble in the Pcell provided by an upper layer). If $P_{O\_UE\_PUCCH}$ value changes in an upper layer and the user equipment receives the random access response message (msg2) for the Pcell, the user equipment resets accumulation of $g(i)$.

Embodiment 3

Information on the msg2 transmitted by the base station may include information on a TA (timing advance) value for a cell in which the msg1 is transmitted by the user equipment and PUSCH grant and information on UL delay and CSI request. Hence, if PUSCH scheduled by the msg2 is not transmitted in the cell in which the msg1 is transmitted, cell index information on the TA (timing advance) command should be included in the msg2 and index information on a cell to which the PUSCH grant is to be applied should be respectively configured. If the PUSCH scheduled by the msg2 is not applied to the cell in which the msg1 is transmitted, the PUSCH should be configured with f(i) = $\Delta P_{rampup}$ (initial value setting of the accumulated TPC command) among PUSCH power control parameters of the cell in which the msg1 is transmitted. According to 3GPP LTE TS 36.213 standard document, PCell is configured with $f_c(0)=\Delta P_{rampup}+\delta_{msg2}$.

Embodiment 4

In the present embodiment, defining a PUSCH assigned by a random access response grant (msg2) with a condition of 'j = 2' and setting $P_{O\_UE\_PUSCH.c}(j)$ among power control formulas at this time are explained. $\Delta_{PREAMBLE\_Msg3}$ is limitedly included for a contention based random access procedure only.

In a non-contention based random access procedure, a base station transmits a normal PUSCH instead of an msg3. Hence, in this case, power control of PUSCH follows PUSCH power control. In particular, in the $P_{O\_UE\_PUSCH.c}(j)$, j is configured with 1. A TPC command of the msg2 is not applied. Or, j is configured with 2 and the base station informs the user equipment of the $P_{O\_UE\_PUSCH.c}(j)$ in a manner of defining the $P_{O\_UE\_PUSCH.c}(j)$ with $\Delta_{PREAMBLE\_PUSCH}$ *granted by RAR* instead of $\Delta_{PREAMBLE\_Msg3}$. Such a concept as $\Delta_{PREAMBLE\_Msg3}$, a difference value between a signal transmission power and reception power can be informed to the msg1 and PUSCH (granted by RAR (random access response)) with a single or multi-level. Or, a definition described in the following can be applied to a contention based random access procedure.

$P_{O\_PUSCH.c}(j)$ is a parameter configured by a sum of a cell-specific nominal component $P_{O\_NOMINAL\_PUSCH.c}(j)$ for j=0 and 1 provided from an upper layer and a component $P_{O\_UE\_PUSCH.c}(j)$ for j=o and 1 provided from the upper layer. This parameter is a value informed to the user equipment by the base station.

In case of performing PUSCH transmission/retransmission corresponding to a dynamically scheduled grant, j corresponds to 1. In case of performing PUSCH transmission/retransmission corresponding to a random access response grant, j corresponds to 2. And, it satisfies a following condition. $P_{O\_NOMINAL\_PUSCH.c}(2) = P_{O\_PRE} + \Delta_{PREAMBLE\_Msg3}$. A parameter $P_{O\_PRE}$(*preambleInitialReceivedTargetPower*) and $\Delta_{PREAMBLE\_Msg3}$ are signaled in an upper layer.

The above-mentioned embodiments according to the present invention can also be extensively applied to a system supporting two or more TA groups. And, a user equipment can efficiently configure transmit power in a system to which multiple timing advances are applied as well.

The above-described embodiments may correspond to combinations of elements and features of the present invention in prescribed forms. And, it may be able to consider that the respective elements or features may be selective unless they are explicitly mentioned. Each of the elements or features may be implemented in a form failing to be combined with other elements or features. Moreover, it may be able to implement an embodiment of the present invention by combining elements and/or features together in part. A sequence of operations explained for each embodiment of the present invention may be modified. Some configurations or features of one embodiment may be included in another embodiment or can be substituted for corresponding configurations or features of another embodiment. And, it is apparently understandable that a new embodiment may be configured by combining claims failing to have relation of explicit citation in the appended claims together or may be included as new claims by amendment after filing an application.

While the present invention has been described and illustrated herein with reference to the preferred embodiments thereof, it will be apparent to those skilled in the art that various modifications and variations can be made therein without departing from the spirit and scope of the invention. Thus, it is intended that the present invention covers the modifications and variations of this invention that come within the scope of the appended claims and their equivalents.

INDUSTRIAL APPLICABILITY

Accordingly, a method of setting uplink transmit power, which is set by a user equipment in a wireless communication system, can be industrially applied to various mobile communication systems including 3GPP LTE, LTE-A system, and the like.

**Claims**

1. A method of setting an uplink transmit power by a user equipment in a wireless communication system, the method comprising:

   configuring a plurality of configured serving cells from a base station;
   transmitting a random access message including a random access preamble on a secondary cell (Scell) among a plurality of the configured serving cells to the base station;
   receiving a random access response message from the base station in response to the random access message; and
   resetting a factor value of an accumulated mode indicating an adjustment state of a current uplink transmission control on the scell in which the random access message is transmitted, in accordance with reception of the random access response message.

2. The method of claim 1, wherein the factor value corresponds to a value related to PUSCH (physical uplink shared channel) or PUCCH (physical uplink control channel).

3. The method of claim 2, wherein the random access response message comprises a transmit power control (TPC) command and wherein if the factor value is reset, an initial value of the factor value is set using the TPC command value included in the random access response message and a total power ramp-up value in accordance with at least one-time random access preamble transmission on the Scell more than once.

4. The method of claim 2, wherein if the random access response message is received on a prescribed cell among a plurality of the serving cells except the Scell and a UE-specific component coefficient value related to the PUSCH or the PUCCH is signaled by the base station, the factor value is set to 0 in a manner of being reset.

5. The method of claim 3, further comprising:

  determining uplink transmit power to transmit the PUSCH or the PUCCH using the set initial value of the factor value; and
  transmitting the PUSCH or the PUCCH using the determined uplink transmit power.

6. The method of claim 1, wherein the factor value is not reset for a remaining cell among a plurality of the configured serving cells except the Scell.

7. The method of claim 6, wherein the Scell belongs to a first TA (timing advance) group and wherein the remaining cell belongs to a second TA group.

8. The method of claim 6, wherein the remaining cell corresponds to a cell with which uplink synchronization is matched.

9. The method of claim 7, wherein the second TA group comprises a primary cell (Pcell).

10. A user equipment of setting an uplink transmit power in a wireless communication system, the user equipment comprising:

  a receiver configured to receive information on a plurality of configured serving cells from a base station;
  a transmitter configured to transmit a random access message including a random access preamble on a secondary cell (Scell) among a plurality of the configured serving cells to the base station, wherein the receiver is further configured to receive a random access response message from the base station in response to the random access message; and
  a processor configured to reset a factor value of an accumulated mode indicating an adjustment state of a current uplink transmission control on the scell in which the random access message is transmitted in accordance with reception of the random access response message.

11. The user equipment of claim 10, wherein the processor is configured not to reset the factor value for a remaining cell among a plurality of the configured serving cells except the Scell.

12. The user equipment of claim 11, wherein the Scell belongs to a first TA (timing advance) group and wherein the remaining cell belongs to a second TA group.

13. The user equipment of claim 11, wherein the remaining cell corresponds to a cell with which uplink synchronization is matched.

14. The user equipment of claim 12, wherein the second TA group comprises a primary cell (Pcell).

# FIG. 1

E-UMTS

FIG. 2

# FIG. 3

**(a)**

Radio frame

| #0 | #1 | #2 | ⋯ | #18 | #19 |

Slot

Sub-frame

**(b)**

One radio frame, $T_s = 307200T = 10ms$

One half-frame, $T_s = 153600T = 5ms$

One slot, $T_{slot} = 15360T_s$

One subframe, $30720T_s$

$30720T_s$

| Subframe#0 | Subframe#2 | Subframe#3 | Subframe#4 | Subframe#5 | | | Subframe#7 | Subframe#8 | Subframe#9 |

DwPTS  GP  UpPTS

DwPTS  GP  UpPTS

# FIG. 4

One downlink slot

7 OFDM symbols

$N^{DL} \times 12$ Sub-carriers

12 Sub-carriers

Resource block
12×7 resource elements

Resource element

# FIG. 5

Control region  Data region

1st slot  2nd slot

Freq.  Subframe

Time  (a)

Control Region

Data Region

RB pair

One slot  One slot

Freq.  Subframe

Time  (b)

## FIG. 6

# FIG. 7

Component carrier

DL | Carrier 1 | Carrier 2 | Carrier 3 | Carrier 4

UL | Carrier 1 | Carrier 2

(a)

Component carrier

DL | Carrier 1 | Carrier 2

UL | Carrier 1 | Carrier 2 | Carrier 3 | Carrier 4

(b)

FIG. 8

EP 2 779 759 A1

# FIG. 9

Base Station (BS)

msg1 (PRACH preamble)     PRACH     msg2 (RSP)     msg3 (PUSCH+ID)

User Equipment (UE)

S910          S920     S930

## INTERNATIONAL SEARCH REPORT

International application No.

**PCT/KR2012/009415**

### A. CLASSIFICATION OF SUBJECT MATTER

***H04W 52/54(2009.01)i, H04W 52/36(2009.01)i, H04J 11/00(2006.01)i***

According to International Patent Classification (IPC) or to both national classification and IPC

### B. FIELDS SEARCHED

Minimum documentation searched (classification system followed by classification symbols)
H04W 52/54; H04B 7/26; H04W 52/26; H04W 52/24; H04W 52/40

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: uplink|uplink, cell|cell, power|power

### C. DOCUMENTS CONSIDERED TO BE RELEVANT

| Category* | Citation of document, with indication, where appropriate, of the relevant passages | Relevant to claim No. |
|---|---|---|
| A | KR 10-2011-0102233 A (LG ELECTRONICS INC.) 16 September 2011<br>See abstract, claims 1-13 and figure 5 | 1-14 |
| A | 3GPP TR36.808 V1.7.0, Evolved Universal Terrestrial Radio Access (E-UTRA) and Evolved Universal Terrestrial Radio Access Network (E-UTRAN); Overall description; Stage 2 (Release 10), 10 October 2011<br>See paragraphs 5.2.7, 8.1 | 1-14 |
| A | 3GPP TS36.300 V10.5.0, Evolved Universal Terrestrial Radio Access (E-UTRA); Carrier Aggregation; Base Station (BS) radio transmission and reception (Release 10), 03 October 2011<br>See paragraphs 6.3, 6.4 | 1-14 |
| A | KR 10-2010-0126549 A (QUALCOMM INCORPORATED) 01 December 2010<br>See abstract, claims 1-10 and figure 4 | 1-14 |
| A | KR 10-2011-0079625 A (NTT DOCOMO, INC.) 07 July 2011<br>See abstract, claims 1-3 and figure 4 | 1-14 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 MARCH 2013 (21.03.2013) | **22 MARCH 2013 (22.03.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2012/009415**

| Patent document cited in search report | Publication date | Patent family member | Publication date |
|---|---|---|---|
| KR 10-2011-0102233 A | 16.09.2011 | WO 2011-111988 A2 | 15.09.2011 |
| | | WO 2011-111988 A3 | 15.09.2011 |
| KR 10-2010-0126549 A | 01.12.2010 | AU 2009-228525 A1 | 01.10.2009 |
| | | CA 2717174 A1 | 01.10.2009 |
| | | CN 101978759 A | 16.02.2011 |
| | | EP 2279643 A1 | 02.02.2011 |
| | | JP 2011-515997 A | 19.05.2011 |
| | | TW 201014413 A | 01.04.2010 |
| | | US 2009-0238136 A1 | 24.09.2009 |
| | | US 8228855 B2 | 24.07.2012 |
| | | WO 2009-120634 A1 | 01.10.2009 |
| KR 10-2011-0079625 A | 07.07.2011 | CN 102160432 A | 17.08.2011 |
| | | EP 2334125 A1 | 15.06.2011 |
| | | JP 05-085481 B2 | 14.09.2012 |
| | | JP 2010-074740 A | 02.04.2010 |
| | | US 2011-0218015 A1 | 08.09.2011 |
| | | WO 2010-032774 A1 | 25.03.2010 |

Form PCT/ISA/210 (patent family annex) (July 2009)